(19) Europäisches Patentamt
European Patent Office
Office européen des brevets

(11) **EP 3 131 998 B1**

(12) **EUROPEAN PATENT SPECIFICATION**

(45) Date of publication and mention
of the grant of the patent:
**19.02.2020 Bulletin 2020/08**

(51) Int Cl.:
*C09K 3/14* *(2006.01)*      *C23C 18/12* *(2006.01)*
*C09C 1/40* *(2006.01)*      *C04B 35/10* *(2006.01)*
*C04B 35/111* *(2006.01)*      *C04B 35/628* *(2006.01)*

(21) Application number: **15715280.2**

(22) Date of filing: **10.04.2015**

(86) International application number:
**PCT/EP2015/057908**

(87) International publication number:
**WO 2015/158632 (22.10.2015 Gazette 2015/42)**

(54) **ABRASIVE GRAIN ON THE BASIS OF ELECTROFUSED ALUMINUM OXIDE WITH A SURFACE COATING COMPRISING TITANIUM OXIDE AND/OR CARBON**

SCHLEIFKORN AUF BASIS VON ELEKTROGESCHMOLZENEM ALUMINIUMOXID MIT EINER OBERFLÄCHENBESCHICHTUNG MIT TITANOXID UND/ODER KOHLENSTOFF

GRAIN ABRASIF À BASE D'OXYDE D'ALUMINIUM ÉLECTROFONDU À REVÊTEMENT DE SURFACE COMPRENANT DE L'OXYDE DE TITANE ET/OU DU CARBONE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.04.2014   DE 102014105600**
**17.03.2015   DE 102015103934**

(43) Date of publication of application:
**22.02.2017 Bulletin 2017/08**

(73) Proprietor: **IMERTECH SAS**
**75015 Paris (FR)**

(72) Inventor: **FUCHS, Thomas**
**79730 Murg (DE)**

(74) Representative: **Haseltine Lake Kempner LLP**
**Bürkleinstrasse 10**
**80538 München (DE)**

(56) References cited:
**EP-A1- 0 014 236      EP-A2- 0 346 832**
**WO-A1-91/17225      JP-A- H09 255 891**
**US-A- 5 011 508      US-A- 5 106 392**
**US-A- 5 611 828**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to an abrasive grain on the basis of electrofused aluminum oxide with a surface coating comprising titanium oxide and/or carbon.

Abrasive grains are used in loose or bonded form, in particular for machining surfaces. When bonded, abrasive grains are used in the form of abrasive belts, abrasive papers, abrasive wheels or other bonded abrasives, wherein the efficiency of the machining of the surface does not only depend on the characteristics of the abrasive grain itself, but to a considerable extent also on the type and stability of the integration of the abrasive grains in the respective abrasives. The bounding surface between the abrasive grain and the binder phase is of particular importance thereby. Said bounding surface determines the force which is required to break an abrasive grain out of a bond. The harder and more stable an abrasive grain, the larger are the demands on the bond and on the adhesive forces at the bounding surfaces, because the easier it will be to break an abrasive grain out of the bond due to grinding.

Most of the abrasive grains, in particular those produced by means of a melting process, have a relatively smooth surface, which has disadvantageous effects for their integration in the abrasives, which is largely based on adhesion. To solve this problem, a plurality of methods for roughening or for enlarging the surface, respectively, and thus for improving the integration has thus already been proposed in the past.

U.S. 2,527,044 A describes a fused aluminum oxide abrasive grain provided with a coating of fine-particulate metal oxide particles, for example iron oxide, so as to improve the embedding in resin-bonded abrasives. The metal oxide particles adhere to the surface of the abrasive grain by means of a glass-like binder.

U.S. 2,541,658 describes the coating of abrasive grains with a phosphate binder and iron oxide pigments.

EP 0 014 236 A1 describes the treatment of a titanium oxide-containing abrasive grain on the basis of aluminum oxide, wherein a layer of a ceramic mass is fused onto the abrasive grain. Thereby, at the same time an oxidation of the titanium oxide, which is contained in the abrasive grain, takes place associated with a transformation of the structure of the abrasive grain.

In response to the coating with an abrasion-active fine grain according to EP 0 080 604 B1, fine grain particles are applied to the abrasive grain surface together with abrasion-active substances by means of a glass frit.

Abrasive grains comprising a coating of an aqueous binding agent and a complex fine-particulate oxide compound with the general composition $A_xB_yO_z$ are described in DE 102 57 554 B4.

A disadvantage of the above-described methods, in the case of which the enlargement of the abrasive grain surface takes place by applying fine particles adhering to the grain surface by means of a binder, is that the stability of the bond decreases during the grinding operation due to a high stress and strong heating and that the abrasive grain breaks out of the abrasive bond.

EP 0 346 832 discloses a coated silicon carbide abrasive grain coated with a highly dispersive hydrophilic metal oxide without additional binding agents. The highly dispersive hydrophilic metal oxide is thereby preferably mixed in the dry state with the abrasive grains and does subsequently adhere to the surface thereof. Even though the binder was abandoned in this case, however, due to the fact that the particles adhere to the surface only due to physical adhesion, it can also be observed herein that the stability of the bond in the abrasives decreases during the grinding operation and the abrasive grain breaks out of the bond. US 5,611,828 refers to alpha alumina-based abrasive grains having a metal boride coating thereon.

EP 0 652 918 describes an abrasive grain comprising a metal oxide coating, wherein precursors of alpha-aluminum oxide abrasive grains are coated with a coating composition comprising a metal alkoxide, wherein the coated particles are subjected to a temperature treatment, so as to obtain a metal oxide coating which is autogenously bonded to the surface of the particles. Green bodies, which are obtained via a sol-gel method from a boehmite dispersion after drying and calcination and which are treated by means of a solution comprising a metal alkoxide, are used as base particles. The green bodies treated in this manner are subjected to a temperature treatment of between 400°C and 1000°C, wherein a transformation of the metal alkoxide to metal oxide takes place, which metal oxide is autogenously bonded to the surface of the base particles. The coated base particles are subsequently sintered at temperatures of between 1200°C and 1650°C, so as to obtain an alpha-aluminum oxide abrasive grain. A disadvantage of this method is that it is very complicated and furthermore limited to abrasive grains which are obtained via sol-gel methods.

There is thus still the need for a coating having advantages as compared to the state of the art, in particular for abrasive grains produced via a melting process.

It is thus the object of the present invention to provide a coated abrasive grain on basis of electrofused aluminum oxide comprising an enlarged surface, which grain can be integrated well and permanently in the abrasives even in response to a strong mechanical and thermal stress and which thus does not have the described disadvantages of the state of the art.

The object is solved by means of an abrasive grain on the basis of electrofused aluminum oxide with a surface coating comprising titanium oxide and/or carbon, wherein compounds of titanium oxide particles and/or carbon particles formed at the abrasive grain surface by means of a temperature treatment are tightly connected to the abrasive grain surface. A direct tight bond without an additional binding agent is thereby formed by reactive sintering between the abrasive grain surface and the titanium oxide and/or carbon particles comprising an average particle size of between 10 nm and 10 $\mu$m.

When searching for a possibility for improving the surface structure of abrasive grains on the basis of electrofused aluminum oxide, it was found that abrasive grains are obtained, in the case of which a direct tight bond is formed between the abrasive grain surface and the titanium oxide compounds comprising an average particle size of between 10 nm and 10 $\mu$m without an additional binding agent in response to a coating with a fine-particulate reactive titanium oxide and a subsequent temperature treatment.

A particularly well-suited base material for the coating is a pyrogenic titanium oxide which is offered by Evonik under the name Aeroxide $TiO_2$ P25 and the average primary particle size of which is 21 nm. Further tests then showed that also considerably coarser $TiO_2$ particles can be successfully used under correspondingly adapted reaction conditions, wherein the average size of the primary particles is preferably between 10 nm and 1 $\mu$m, more preferably between 10 nm and 100 nm.

With optical analyses of the coated abrasive grains, it was found that the distribution of the particles bonded on the surface is relatively inhomogeneous and that concentrations of titanium oxide compounds can be found in particular at the edges, recesses and fissures. It also became evident thereby that the particle size of the titanium oxide compounds formed on the surface of the abrasive grain is relatively coarse and inhomogeneous, which is most likely due to the fact that an irregular crystal growth takes place during the temperature treatment.

Due to these concentrations of the coating particles at the grain edges and flaws on the abrasive grain surface, stability analyses were also carried out using individual coated grains, whereby it turned out that the abrasive grains coated and sintered with titanium oxide have an increased grain toughness as compared to the uncoated abrasive grains.

The grain toughness of the abrasive grains was determined via the micro grain decomposition by grinding in a ball mill, wherein 10 g of corundum (of corresponding grit size) are ground in a ball mill filled with 12 steel balls (diameter 15 mm, weight 330-332 g) at 188 revolutions per minute for a predetermined period of time. The ground abrasive grain is subsequently screened in a screening machine (Haver Böcker EML 200) for 5 minutes via a corresponding fine screen, which is 2 classes finer than the bottom screen, which is defined for the corresponding grit size, and the fine fraction is weighed out. The MKZ value follows from:

$$MKZ(\%) = \frac{screen\ passage\ fine\ screen}{total\ weight} \times 100$$

In the context of the tests, mixtures of titanium oxide with carbon were then also used, so as to possibly further improve the physical characteristics of the individual grains by simultaneously forming reduced titanium oxide compounds. Surprisingly, it was found thereby that coated abrasive grains, which, on the one hand, encompass excelling stability values and which, on the other hand, reveal good grinding efficiencies, are not only obtained when partially, but also when completely replacing titanium oxide with carbon.

Sintering tests were carried out using differently coated and uncoated abrasives grains at temperatures between 800°C and 1400°C, whereby it became evident that the grain toughness generally increases with increasing sintering temperature. Furthermore, it was found that the grain toughness of all grains on basis of electrofused aluminum oxide coated with titanium oxide and/or carbon disproportionally increases in comparison to the uncoated grains in response to a characteristic temperature with regard to the respective coating. This characteristic temperature exceeds in all cases 800°C, mostly 1000°C and 1250°C, respectively, so that the titanium oxide and/or carbon particles are sintered at a temperature of more than 800°C, preferably more than 1000°C, and more preferably more than 1250°C.

The percentage by weight of the surface coating is advantageously between 0.01 and 5 % by weight, based on the weight of the untreated grain, whereby a preferred embodiment of the present invention comprises 1 to 2 % by weight surface coating. Thereby, the layer thickness of the surface coating is preferably less than 10 $\mu$m.

It was also found that the ratio of $TiO_2$ to carbon should be advantageously in the range from 10:1 to 1:10 prior to the sintering when using mixtures of titanium oxide and carbon.

Some selected coatings for abrasive grains on basis of electrofused aluminum oxide are characterized in Table 1 below via the micro grain decomposition.

Mono-crystalline aluminum oxide by Imerys Fused Minerals with the name SCT SK in the grit size F46 according to FEPA was used for the tests. Highly dispersive titanium oxide comprising an average particle size of between 10 nm and 50 nm as well as carbon black, also comprising an average particle size of between 10 nm and 50 nm, were used as base materials for the coating, wherein Aeroxide $TiO_2$ P25 by Evonik and Carbon Black Raven PFEB by IMCD Deutschland GmbH & Co. KG having an average particle size of 21 nm and 24 nm, respectively, were used in the context of the analyses. The sintering was carried out at 1200°C and 1350°C, respectively, in the present of air.

Table 1

| Abrasive Grain: Mono-crystalline aluminum oxide SCTSK Grit Size: F46 (FEPA) | | | | |
|---|---|---|---|---|
| Example | Coating (wt.%) | | MKZ (%) | |
| | $TiO_2$ | C | 1200 °C | 1350 °C |
| 1 (Comparison) | - | - | 6.0 | 5.7 |
| 2 | 0.5 | - | 5.7 | 5.3 |
| 3 | 1.0 | - | 4.8 | 4.3 |
| 4 | 2.0 | - | 4.2 | 3.8 |
| 5 | - | 0.5 | 5.5 | 5.1 |
| 6 | - | 1.0 | 4.9 | 4.2 |
| 7 | - | 2.0 | 4.9 | 4.4 |
| 8 | 0.75 | 0.25 | 4.8 | 4.3 |
| 9 | 0.50 | 0.50 | 4.6 | 4.5 |
| 10 | 0.25 | 0.75 | 5.0 | 4.4 |

Due to the fact that the screen passage (= abrasion) is weighed out to determine the MKZ value, this means for the table above that the grain toughness is higher, the smaller the MKZ value.

**Grinding Tests**

To also verify the positive effect of the MKZ values for the grinding practice, additional grinding tests were carried out in the case of examples 1 to 10 treated at 1350°C.
For this purpose, thin cut-off wheels were produced with the dimensions 125 x 1.2 x 22.23 mm, by means of which different workpieces were then cut, wherein 3 precuts were initially carried out for conditioning the wheel and a total of 24 cuts was subsequently carried out by means of each wheel. The grinding efficiency was determined via the decrease of the wheel diameter (wheel wear), wherein the so-called G-ratio was determined as dimension for the grinding efficiency via the wheel wear and the cutting area. The grinding results for the different workpieces and materials are summarized in Tables 2 to 4.

Table 2

| Grinding machine: | FEIN WS14 | | |
|---|---|---|---|
| Power: | 1.2 kW | | |
| Speed: | 8.800 rpm | | |
| Number of cuts: | 24 | | |
| Workpiece: | angle (30 / 30 / 3 mm) | | |
| Material: | ST 37 | | |
| Abrasive: | cut-off wheel (125 x 1.2 x 22.23 mm) | | |
| Abrasive grain: | SCTSK F46 | | |
| Example | Wear | G-ratio | Grinding efficiency |
| 1 (Comparison) | 6.4 mm | 3.53 | 100% |
| 2 | 4.6 mm | 4.87 | 138% |
| 3 | 4.8 mm | 4.66 | 132% |
| 4 | 4.3 mm | 5.19 | 147% |

(continued)

| Example | Wear | G-ratio | Grinding efficiency |
|---|---|---|---|
| 5 | 6.2 mm | 3.62 | 103% |
| 6 | 5.6 mm | 3.99 | 113% |
| 7 | 5.3 mm | 4.26 | 121% |
| 8 | 4.2 mm | 5.35 | 152% |
| 9 | 4.6 mm | 4.91 | 139% |
| 10 | 5.5 mm | 4.05 | 122% |

In the case of the grinding test series summarized in Table 2 above, a construction steel ST37 angle with the dimensions 30 x 30 x 3 mm was cut a total of 24 times and the wear of the cut-off wheels was subsequently determined.

All cut-off wheels comprising coated abrasive grains show lower wear and thus a better grinding efficiency than the cut-off wheel comprising the uncoated reference grain (example 1). Even though the best result is reached with 2 % by weight of $TiO_2$ (example 4) in the case of the abrasive grains, which are only coated with $TiO_2$, a clear trend that the grinding power also increases with an increasing coating portion cannot be derived in view of the results with 0.5 % by weight of $TiO_2$ (example 2) and 1.0 % by weight of $TiO_2$ (example 3). The cut-off wheels comprising abrasive grains only coated with carbon (examples 5-7) wear considerably more than the beforementioned cut-off wheels. The result for the abrasive grains coated with 0.5 % by weight of carbon is thus not much better than that for the uncoated reference grain. The result of the cut-off wheel, in the case of which a mixture of 0.25 % by weight of carbon and 0.75 % by weight of $TiO_2$ was used for the coating of the abrasive grain (example 8), is surprisingly good.

A test series, in the case of which a tube of stainless steel (V2A) comprising a thickness of 2 mm and a diameter of 20 mm was cut, is summarized in Table 3 below. As usual, the grinding efficiency was determined via the wheel wear. As a whole, all of the grinding results are considerably inferior to the case of the construction steel. As a whole, the results of the cut-off wheels comprising the abrasive grains only coated with carbon were the worst (examples 5-7). The cut-off wheel comprising the abrasive grains coated with the mixture of 0.25 % by weight of carbon and 0.75 % by weight of $TiO_2$ (example 8) again shows a very good result along with the wheels comprising the abrasive grains only coated with 1 % by weight and 2 % by weight of $TiO_2$.

Table 3

| Grinding machine: | FEIN WS14 | | |
|---|---|---|---|
| Power: | 1.2 kW | | |
| Speed: | 8.800 rpm | | |
| Number of cuts: | 24 | | |
| Workpiece: | tube (20 / 2 mm) | | |
| Material: | V2A (1.4301) | | |
| Abrasive: | cut-off wheel (125 x 1.2 x 22.23 mm) | | |
| Abrasive grain: | SCTSK F46 | | |
| Example | Wear | G-Factor | Grinding efficiency |
| 1 (comparison) | 2.98 mm | 4.33 | 100% |
| 2 | 2.60 mm | 4.97 | 114% |
| 3 | 2.34 mm | 5.52 | 127% |
| 4 | 2.36 mm | 5.47 | 126% |
| 5 | 2.72 mm | 4.88 | 113% |
| 6 | 2.58 mm | 5.00 | 115% |
| 7 | 2.57 mm | 5.02 | 116% |
| 8 | 2.31 mm | 5.59 | 127% |

(continued)

| Example | Wear | G-Factor | Grinding efficiency |
|---------|------|----------|---------------------|
| 9 | 2.63 mm | 4.91 | 113% |
| 10 | 2.79 mm | 4.63 | 106% |

In the last test series summarized in Table 4 below a 20 mm rod of grey cast iron (GG25) was machined.

As a whole, higher power increases as compared to the cut-off wheel comprising an uncoated abrasive grain were reached again in the case of this material. The best results were obtained again with example 4 (2% $TiO_2$) and with example 8 (0.25 % carbon, 0.75% $TiO_2$). In the case of this test series, the results of examples 2-4 appear to confirm an increase of the grinding efficiency as the $TiO_2$ content increases. However, this trend is not so pronounced that it is questionable, whether a doubling of the use of the expensive raw material pyrogenic $TiO_2$ will be economically justified in the case of practical application.

Table 4

| Grinding machine: | FEIN WS14 | | |
|-------------------|-----------|---|---|
| Power: | 1.2 kW | | |
| Speed: | 8.800 rpm | | |
| Number of cuts: | 24 | | |
| Workpiece: | rod (20 mm) | | |
| Material: | grey cast iron (GG25) | | |
| Grinding means: | cut-off wheel (125 x 1.2 x 22.23 mm) | | |
| Abrasive grain: | SCTSK F46 | | |
| Example | Wear | G-ratio | Grinding efficiency |
| 1 (comparison) | 0.42 mm | 97.08 | 100% |
| 2 | 0.37 mm | 109.21 | 112% |
| 3 | 0.32 mm | 127.42 | 131% |
| 4 | 0.29 mm | 140.60 | 145% |
| 5 | 0.39 mm | 104.55 | 108% |
| 6 | 0.31 mm | 131.53 | 135% |
| 7 | 0.36 mm | 113.26 | 116% |
| 8 | 0.28 mm | 145.62 | 150% |
| 9 | 0.35 mm | 116.50 | 120% |
| 10 | 0.39 mm | 104.55 | 108% |

The enclosed images taken with a scanning electron microscope provide a plausible explanation for the more or less highly-distinct power increase in response to the use of different coating particles.

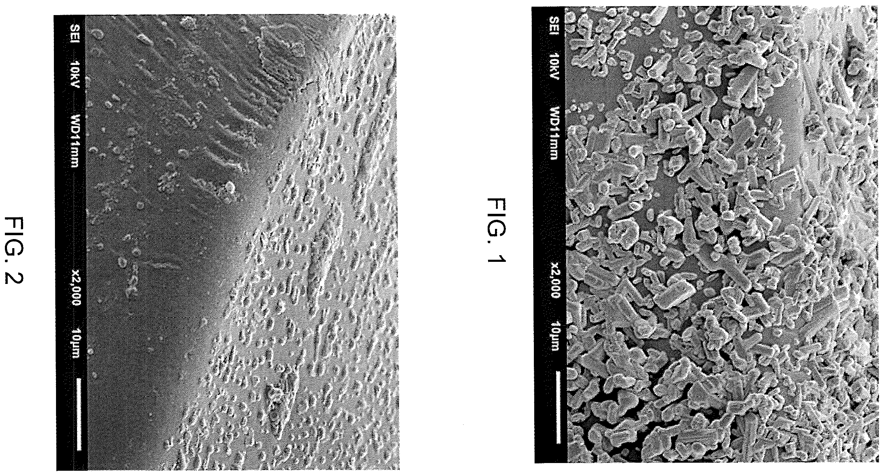

Figure 1 thereby shows the surface of an abrasive grain coated with 2 % by weight of $TiO_2$ in 2.000-fold magnification, on which relatively coarse, mostly elongated $TiO_2$ crystals or aluminum titanate crystals can be seen, wherein some particles reach a longitudinal expansion of more than 10 $\mu$m. In this connection, it has to be noted that the chemical and crystallographic composition of the compounds was not investigated in detail. As a whole, the average particle size, however, lies in the range of between 0.01 $\mu$m and 10 $\mu$m, preferably in the range of between 1 $\mu$m and 10 $\mu$m. Pyrogenic $TiO_2$ with an average particle size of between 10 and 50 nm was used as base material, so that also a strong irregular crystal growth had to have taken place during the temperature treatment. The surface itself is considerably increased due to the particles tightly connected thereto, whereby an excellent integration of the correspondingly coated abrasive grains into the binding agent matrix of the abrasives is to be expected, which is confirmed by means of the grinding tests. It can furthermore be seen in Figure 1 that the coating of the surface with $TiO_2$ comprising particles is relatively dense providing an explanation for the fact that coated abrasive grains comprising less $TiO_2$ on the surface

also show good grinding efficiencies.

Figure 2 shows the surface of an abrasive grain coated with 1 % by weight of carbon also in 2.000-fold magnification. In contrast to the $TiO_2$ crystals, the carbon comprising particles show an amorphous structure, wherein some clusters having a diameter of more than 10 $\mu$m are also present in this case. It could not be finally clarified to which extent the sinter-fused particles are carbides, oxy-carbides or other mixed crystals in the system Al, C, O, and N. The average particle size herein also lies within a range of between 0.01 and 10 $\mu$m. The amorphous rounded shape of the carbon comprising particles suggests that the integration of the correspondingly treated abrasive grains into the binding agent matrix will not be as tight as that of the abrasive grains with the $TiO_2$ containing particles on the surface, which form corners and edges, by means of which the abrasive grain is anchored in the binding agent matrix.

**Claims**

1. An abrasive grain on the basis of electrofused aluminum oxide with a surface coating comprising titanium oxide and/or carbon, wherein compounds formed of titanium oxide particles and/or carbon particles at the abrasive grain surface by means of a temperature treatment are tightly connected to the abrasive grain surface,
   **characterized in that**
   a direct tight bond without an additional binding agent is formed between the abrasive grain surface and the titanium oxide and/or carbon particles comprising an average particle size of between 0.01 $\mu$m and 10 $\mu$m.

2. The abrasive grain according to claim 1,
   **characterized in that**
   the titanium oxide and/or carbon compounds tightly connected on the surface have an average particle size in the range of between 1 $\mu$m and 10 $\mu$m.

3. The abrasive grain according to claim 1 or 2,
   **characterized in that**
   the percentage by weight of the surface coating is between 0.01 and 5 % by weight, based on the weight of the untreated abrasive grain.

4. The abrasive grain according to one of claims 1 to 3,
   **characterized in that**
   the surface coating has a layer thickness of less than 10 $\mu$m.

5. The abrasive grain according to one of claims 1 to 4,
   **characterized in that**
   the titanium oxide and/or carbon particles are sintered onto the abrasive grain surface at a temperature of more than 800°C, preferably more than 1000°C, more preferably more than 1250°C.

6. The abrasive grain according to one of claims 1 to 5,
   **characterized in that**
   the ratio of $TiO_2$ to carbon is between 10:1 and 1:10 prior to the sintering when using mixtures of $TiO_2$ and Carbon.

7. A method for making an abrasive grain on basis of electrofused aluminum oxide with a surface coating comprising titanium oxide and/or carbon, wherein the titanium oxide and/or carbon compounds formed in response to the coating are tightly connected to the abrasive grain surface, wherein a mixture of abrasive grains and titanium oxide and/or carbon particles comprising an average particle size of between 10 nm and 10 $\mu$m is produced, wherein the titanium oxide and/or carbon particles are sintered onto the abrasive grain surfaces without additional binding agents at a temperature of more than 800°C.

8. The method according to claim 7,
   **characterized in that**
   highly dispersive titanium oxide comprising an average particle size of between 10 nm and 50 nm is used as titanium oxide particles.

9. The method according to claim 7 or 8,
   **characterized in that**
   carbon black comprising an average particle size of between 10 nm and 50 nm is used as carbon particles.

**Patentansprüche**

1. Schleifkorn auf Basis von elektrisch geschmolzenem Aluminiumoxid mit einer Titanoxid und/oder Kohlenstoff umfassenden Oberflächenbeschichtung, wobei die an der Schleifkornoberfläche bei einer Temperaturbehandlung aus Titanoxid- und/oder Kohlenstoffpartikeln gebildeten Verbindungen fest mit der Schleifkornoberfläche verbunden sind,
**dadurch gekennzeichnet, dass**
eine direkte feste Verbindung ohne zusätzliches Bindemittel zwischen der Schleifkornoberfläche und den Titanoxid- und/oder Kohlenstoffverbindungen mit einer mittleren Partikelgröße zwischen 0,01 $\mu$m und 10 $\mu$m und ausgebildet ist.

2. Schleifkorn gemäß Anspruch 1,
**dadurch gekennzeichnet, dass**
die an der Schleifkornoberfläche fest verbundenen Titanoxid- und/oder Kohlenstoffverbindungen eine mittlere Partikelgröße im Bereich von 1 $\mu$m bis 10 $\mu$m aufweisen.

3. Schleifkorn gemäß Anspruch 1 oder 2,
**dadurch gekennzeichnet, dass**
der Gewichtsanteil der Oberflächenbeschichtung 0,01 bis 5 Gew.-%, bezogen auf das Gewicht des unbehandelten Schleifkorns, beträgt.

4. Schleifkorn gemäß einem der Ansprüche 1 bis 3,
**dadurch gekennzeichnet, dass**
die Oberflächenbeschichtung eine Schichtdicke von weniger als 10 $\mu$m aufweist.

5. Schleifkorn gemäß einem der Ansprüche 1 bis 4,
**dadurch gekennzeichnet, dass**
die Titanoxid- und/oder Kohlenstoffpartikel bei einer Temperatur von mehr als 800°C, vorzugsweise mehr als 1000°C, besonders bevorzugt mehr als 1250°C, auf die Schleifkornoberfläche gesintert sind.

6. Schleifkorn gemäß einem der Ansprüche 1 bis 5,
**dadurch gekennzeichnet, dass**
bei einer Verwendung von $TiO_2$- und Kohlenstoffmischungen das Verhältnis von $TiO_2$ zu Kohlenstoff vor der Sinterung 10:1 bis 1:10 beträgt.

7. Verfahren zur Herstellung eines Schleifkorns auf Basis von elektrisch geschmolzenem Aluminiumoxid mit einer Titanoxid und/oder Kohlenstoff umfassenden Oberflächenbeschichtung, wobei die bei der Beschichtung gebildeten Titanoxid- und/oder Kohlenstoffverbindungen fest mit der Schleifkornoberfläche verbundenen sind, wobei eine Mischung aus Schleifkörnern und Titanoxidund/oder Kohlenstoffpartikeln mit einer mittleren Partikelgröße zwischen 10 nm und 10 $\mu$m hergestellt wird, wobei die Titanoxid- und/oder Kohlenstoffpartikel ohne zusätzliche Bindemittel bei einer Temperatur von mehr als 800°C auf die Schleifkornoberflächen gesintert werden.

8. Verfahren gemäß Anspruch 7,
**dadurch gekennzeichnet, dass**
als Titanoxidpartikel hochdisperses Titanoxid mit einer mittleren Teilchengröße zwischen 10 nm und 50 nm eingesetzt wird.

9. Verfahren gemäß Anspruch 7 oder 8,
**dadurch gekennzeichnet, dass**
als Kohlenstoffpartikel Ruß mit einer mittleren Teilchengröße zwischen 10 nm und 50 nm eingesetzt wird

**Revendications**

1. Un grain abrasif à base d'oxyde d'aluminium électrofondu avec un revêtement de surface comprenant de l'oxyde de titane et/ou du carbone, dans lequel des composés formés de particules d'oxyde de titane et/ou de particules de carbone sur la surface du grain abrasif par un traitement thermique sont connectés étroitement à la surface de grain abrasif,

**caractérisé en ce que**
une liage direct et étroit sans liant supplémentaire est formé entre la surface du grain abrasif et les particules d'oxyde de titane et/ou de carbone comprenant une taille de particule moyenne entre 0,01 $\mu$m et 10 $\mu$m.

2. Le grain abrasif selon la revendication 1,
**caractérisé en ce que**
les composés d'oxyde de titane et/ou de carbone connectés étroitement sur la surface ont une taille de particule moyenne dans l'intervalle entre 1 $\mu$m et 10 $\mu$m.

3. Le grain abrasif selon la revendication 1 ou 2,
**caractérisé en ce que**
le pourcentage en poids du revêtement de surface est entre 0,01 et 5 pour cent en poids, à la base du poids du grain abrasif non traité.

4. Le grain abrasif selon une des revendications 1 à 3,
**caractérisé en ce que**
le revêtement de surface a une épaisseur de couche de moins de 10 $\mu$m.

5. Le grain abrasif selon une des revendications 1 à 4,
**caractérisé en ce que**
les particules d'oxyde de titane et/ou de carbone sont frittées sur la surface du grain abrasif à une température de plus de 800°C, de préférence de plus de 1000°C, davantage de préférence de plus de 1250°C.

6. Le grain abrasif selon une des revendications 1 à 5,
**caractérisé en ce que**
le rapport entre $TiO_2$ et carbone est entre 10:1 et 1:10 avant le frittage lors de l'utilisation de mélanges de $TiO_2$ et de carbone.

7. Un procédé pour produire un grain abrasif à base d'oxyde d'aluminium électrofondu avec un revêtement de surface comprenant de l'oxyde de titane et/ou du carbone, dans lequel les composés d'oxyde de titane et/ou de carbone formés en réaction au revêtement sont étroitement connectés à la surface de grain abrasif, dans lequel un mélange de grains abrasifs et de particules d'oxyde de titane et/ou de carbone comprenant une taille moyenne de particules entre 10 nm et 10 $\mu$m est produit, dans lequel les particules d'oxyde de titane et/ou de carbone sont frittées sur les surfaces de grains abrasifs sans liants supplémentaires à une température de plus de 800°C.

8. Le procédé selon la revendication 7,
**caractérisé en ce que**
de l'oxyde de titane hautement dispersif comprenant une taille moyenne de particules entre 10 nm et 50 nm est utilisé comme particules d'oxyde de titane.

9. Le procédé selon la revendication 7 ou 8,
**caractérisé en ce que**
de la suie comprenant une taille moyenne de particules entre 10 nm et 50 nm est utilisée comme particules de carbone.

FIG. 1

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2527044 A
- US 2541658 A
- EP 0014236 A1
- EP 0080604 B1
- DE 10257554 B4
- EP 0346832 A
- US 5611828 A
- EP 0652918 A